# EUROPÄISCHE PATENTSCHRIFT

(11) **EP 2 714 774 B1**
(45) Veröffentlichungstag und Bekanntmachung des Hinweises auf die Patenterteilung: **20.12.2017**
(21) Anmeldenummer: 12723715.4
(22) Anmeldetag: 29.05.2012
(51) Int. Cl.: C08G 77/54

(54) **CYANATBASIERTE HARZE MIT VERRINGERTER VISKOSITÄT SOWIE DARAUS HERGESTELLTE DUROMERE MIT VERBESSERTER SCHLAGFESTIGKEIT**
CYANATE-BASED RESINS WITH REDUCED VISCOSITY AND DUROMERS PRODUCED THEREFROM WITH IMPROVED IMPACT RESISTANCE
RÉSINES À BASE DE CYANATE DOTÉES D'UNE VISCOSITÉ RÉDUITE AINSI QUE DUROMÈRES FABRIQUÉS À PARTIR DE CELLES-CI ET DOTÉS D'UNE RÉSISTANCE AUX CHOCS AMÉLIORÉE

(30) Priorität: 27.05.2011 DE 102011050675
(43) Veröffentlichungstag der Anmeldung: 09.04.2014
(73) Patentinhaber: Fraunhofer Gesellschaft zur Förderung der angewandten Forschung E.V., 80686 München (DE)
(72) Erfinder: BAUER, Monika, 15712 Königs-Wusterhausen (DE); UHLIG, Christoph, 12487 Berlin (DE)
(74) Vertreter: Strehl Schübel-Hopf & Partner
(86) Internationale Anmeldenummer: PCT/EP2012/060046
(87) Internationale Veröffentlichungsnummer: WO 2012/163913

(56) Entgegenhaltungen:
- EP-A1- 1 854 827
- DE-A1-102009 013 410
- US-A- 5 539 041

## Beschreibung

Die Erfindung betrifft Prepolymere, insbesondere Harze bzw. Cyanatharze aus wenigstens einem Cyanat und/oder wenigstens einem Prepolymer davon und wenigstens einem darin dispergierten Siloxan als Härtungsmittel.

Cyanatharze finden ihren Einsatz u.a. als Imprägniermittel für Textilien und Sandwichstrukturen (insbesondere Waben- bzw. Honeycombstrukturen) oder Textilien, die beispielsweise im Flugzeugbau verwendet werden. Derart imprägnierte Werkstoffe besitzen eine für diese Verwendung geeignete Festigkeit und sind vergleichsweise schwer entflammbar.

Um eine gute Verarbeitung der Harze sicherzustellen, können sie ggf. zusätzlich rheologische Modifikatoren enthalten. Solche Modifikatoren oder andere Füllstoffe können auch zum Verbessern der Haftung, der Härte, der Zähigkeit, der Schlagfestigkeit, der Hydrophilie/Hydrophobie oder dgl. erwünscht sein. Diese Modifikatoren der Cyanatharze dürfen dabei nicht zugleich die sehr guten Brandeigenschaften der Cyanatharze (niedrige Wärmefreisetzungsrate, niedrige Rauchgasdichte, einen niedrigen Gehalt an toxischen Gasen im Brandfall) negativ beeinflussen. Insbesondere die Fließeigenschaften der Harze können ggf. hierdurch so eingestellt werden, dass die Heißhärtung (z.B. in einer Presse) zu exzellenten Oberflächen der Produkte führt.

Bekannte Harze weisen eine geringe thermische Beständigkeit durch Verwendung von Kautschukverbindungen mit den Cyanatharzen auf, wobei die Kautschukverbindungen zur Anpassung der Bruchfestigkeit verwendet werden.

Aufgabe der vorliegenden Erfindung ist es, Harze bzw. Cyanatharze bereitzustellen, die vor der Aushärtung eine relativ geringe Viskosität aufweisen, so dass sie sich insbesondere für die Anwendung von Verfahren wie Infusions- und Pultrusionsverfahren eignen, während sie nach der Aushärtung eine verbesserte Schlagfestigkeit bzw. Bruchfestigkeit bzw. Bruchzähigkeit aufweisen und dabei vorteilhaft eine thermische Formstabilität eines aus ihnen hergestellten Duromers unterstützen sollten.

Diese Aufgabe wird durch den Gegenstand des Hauptanspruchs gelöst, wobei die Unteransprüche und Nebenansprüche bevorzugte Ausführungsformen der Erfindung betreffen. Merkmale unterschiedlicher Ausführungsformen können untereinander kombiniert werden.

Zu diesem Zweck wird ein Harz bzw. Cyanatharz bereitgestellt, das durch Vermischen von wenigstens einem (d.h. einem oder mehreren) bevorzugt difunktionellen, oligofunktionellen und/oder polyfunktionellen Cyanat und wenigstens einem (d.h. einem oder mehreren) Siloxan und/oder wenigstens einer siloxanhaltigen Verbindung, erhalten wird. Alternativ oder zusätzlich zu dem erwähnten Cyanat kann wenigstens ein (d.h. ein oder mehrere) Prepolymer mit dem Siloxan vermischt werden, um das erfindungsgemäße Cyanatharz zu erhalten. Dieses Prepolymer wird im Folgenden auch als Edukt-Prepolymer bezeichnet.

Gegebenenfalls können das Cyanat und/oder das Edukt-Prepolymer mit wenigstens einer weiteren copolymerisierbaren Komponente kombiniert werden, die vorteilhaft ein monomeres, oligomeres oder polymeres Silazan ist oder enthält.

Unter "Prepolymer", "Harz" und "prepolymerisiertem Harz" soll im Rahmen dieser Offenbarung gleichermaßen ein bis unterhalb des Gelpunktes vernetztes, aus den oder unter Verwendung der jeweils genannten Ausgangssubstanzen erhaltenes Additionspolymer verstanden werden.

Der Anteil des Siloxans bzw. der siloxanhaltigen Verbindung, sollte bei 0,5 bis 50 Gew.-% liegen, bezogen auf das Gesamtgewicht des erfindungsgemäßen Cyanatharzes. Bevorzugt sind 2 bis 15 Gew.-%. Das Siloxan bzw. die siloxanhaltige Verbindung ist gemäß einer vorteilhaften Ausführungsform dispergiert. Es/sie hat vorzugsweise eine Viskosität von 0,65 bis 2000000, bevorzugt 10 bis 100000, besonders bevorzugt 100 bis 10000 mPas.

Bevorzugt ist das Siloxan bzw. die siloxanhaltige Verbindung in dem Cyanatharz homogen in feinverteilter Form als Polyorganosiloxan-Tropfen mit einem Durchmesser von vorzugsweise 0,001 bis 4 µm, bevorzugt 0,01 bis 0,8 µm, ganz besonders bevorzugt 0,02 bis 0,4 µm enthalten.

Wenn das Siloxan ein Organopolysiloxan ist, handelt es sich insbesondere um ein Polymer der allgemeinen Formel (R3SiO1/2)w(R2SiO2/2)x. (RSiO3/2)y. (SiO4/2)z mit w = 0 bis 20 Mol%, x = 80 bis 99,59 Mol%, y = 0,5 bis 10 Mol%, z = 0 bis 10 Mol%, worin R vorzugsweise Alk(en)yl-, Aryl- oder Alkoxyreste, vorzugsweise Methyl oder Ethyl oder - insbesondere an den Endgruppen - Methoxy oder Ethoxy darstellt, oder um eine Mischung solcher Polymere. Aus der Formel ergibt sich, dass diese Polyorganosiloxane lineare Strukturen aufweisen und keine reaktiven Endgruppen wie Hydroxygruppen besitzen. Trialkylsilyl-Endgruppen sind bevorzugt, insbesondere Trimethylsilyl-Endgruppen. Vorzugsweise ist das mittlere Molekulargewicht des Siloxans relativ niedrig, um auf diese Weise die gewünschten Eigenschaften zu erzielen. Die Viskosität liegt in günstiger Weise im Bereich zwischen 50 und 10000 mPas, insbesondere zwischen 150 und 1500 mPas.

Erfindungsgemäß enthält das Cyanatharz Polydialkylsiloxan-Caprolacton- oder Caprolactam-Copolymer, insbesondere Polydimethylsiloxan-Caprolacton- oder
Caprolactam-Copolymer. Besonders vorteilhaft enthält oder ist das wenigstens eine Siloxan das Polydialkylsiloxan-Caprolacton-Copolymer. Mit anderen Worten: Polydialkylsiloxan-Caprolacton- bzw. Caprolactam-Copolymer kann als die einzige siloxanhaltige Verbindung eingesetzt werden, oder aber in Mischung mit anderen siloxanhaltigen Verbindungen oder mit wenigstens einem Siloxan. Das Polydimethylsiloxan-Caprolacton-Copolymer liegt beispielsweise als Wachs vor, kann erfindungsgemäß aber auch in jedem anderen Aggregatzustand verwendet werden. Bevorzugt handelt es sich dabei um ein lineares Block-Copolymer entweder der Zusammensetzung AₓB mit x ≥1 oder, bevorzugt, der Zusammensetzung ABA. Dabei befindet sich die Siliconkomponente B mit variabler Länge im Mittelteil des Blocks, flankiert von Caprolacton- bzw. Caprolactam-Gruppen bzw. deren Reaktionsprodukten. Vorzugsweise sind die Caprolacton- bzw. -lactam-Endgruppen verkappt, so dass das Copolymer keine reaktiven Endgruppen aufweist, sondern Reste wie Alkyl-, Alkoxy oder Arylgruppen. Auch sollten die Alkylgruppen der Siliconkomponente frei von insbesondere reaktiven Substituenten sein. Vorzugsweise ist das mittlere Molekulargewicht des Copolymers relativ niedrig, um auf diese Weise die gewünschten Eigenschaften zu erzielen. Günstig sind Bereiche zwischen 500 g/mol und 4000 g/mol, bevorzugt sind Bereiche zwischen 600 und 3500 g/mol, stärker bevorzugt sind Bereiche zwischen 800 und 3000 g/mol, noch stärker bevorzugt sind Bereiche zwischen 800 und 2500 und am meisten bevorzugt sind Bereiche zwischen 900 und 2000. Die Menge an Copolymer im Harz kann variieren; in der Regel sind Anteile von 2 bis 10 Gew.-%, bezogen auf die Menge des Cyanatharzes, günstig. Bevorzugt sind 3,5 bis 6,5 Gew.-%.

Besonders bevorzugt wird ein lineares Polydialkylsiloxan-Caprolacton- oder Caprolactam-Block-Copoylmer als einzige siloxanhaltige Verbindung eingesetzt, insbesondere mit den Molekülgrößen wie voranstehend beschrieben. Besonders bevorzugt ist in dieser Ausführungsform kein weiteres Polydialkylsiloxan vorhanden. Ebenfalls besonders bevorzugt ist der Einsatz eines Polydialkylsiloxan-Caprolacton-Copolymers, insbesondere eines Polydimethylsiloxan-Caprolacton-Copolymers.

In einer anderen bevorzugten Ausführungsform wird ein lineares Polydialkylsiloxan eingesetzt, vorzugsweise in Mischung mit einem Caprolacton- bzw. Caprolactam-Copolymeren wie voranstehend beschrieben. Das Gewichtsverhältnis der beiden Komponenten zueinander liegt vorzugsweise zwischen ca. 10 Teilen Polydialkylsiloxan zu 1 Teil Caprolacton- bzw. Caprolactam-Copolymeren und einem Verhältnis von 1:1.

Vorteilhaft kann als siloxanhaltige Verbindung alternativ oder zusätzlich eine Silikonölformulierung verwendet werden. Besonders bevorzugt handelt es sich bei dieser um ein Polyorganosiloxan mit den voranstehend erläuterten Eigenschaften, insbesondere mit einer Viskosität im Bereich von 800 bis 1200.

Die Verwendung ausschließlich unvernetzbarer, linearer Siloxane und/oder siloxanhaltiger Verbindungen ermöglicht die Herstellung von Harzen mit relativ geringer Viskosität, insbesondere von unter 100 mPas, die sich aus diesem Grunde besonders gut für Anwendungen eignen, die den Einsatz eines flüssigen oder pastösen Materials voraussetzen.

Die Wahl der als Ausgangsmaterial für das Harz einzusetzenden multifunktionellen Cyanate ist nicht kritisch. Prinzipiell kann jeder mindestens bifunktionelle Cyanatkörper eingesetzt werden, darunter vor allem aromatische Cyanate und unter diesen wiederum insbesondere di- oder polyfunktionelle Cyanate der nachfolgend aufgeführten Strukturen I-III: 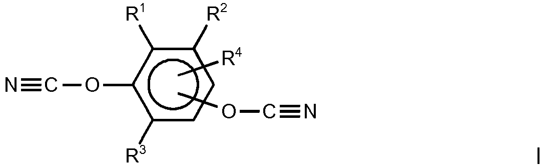 worin R¹ bis R⁴ unabhängig voneinander Wasserstoff, C₁-C₁₀-Alkyl, C₃-C₈-Cycloalkyl, C₁-C₁₀-Alkoxy, Halogen (F, Cl, Br oder I), Phenyl oder Phenoxy ist, wobei die Alkyl- oder Arylgruppen fluoriert oder teilfluoriert sein können. Beispiele sind Phenylen-1,3-dicyanat, Phenylen-1,4-dicyanat, 2,4,5-Trifluorophenylen-1,3-dicyanat; 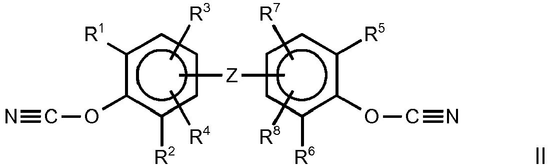 worin R⁵ bis R⁸ wie R¹ bis R⁴ sind und Z eine chemische Bindung, SO₂, CF₂, CH₂, CHF, CH(CH₃), Isopropylen, Hexafluoroisopropylen, C₁₋C₁₀-Alkylen, O, NR⁹, N=N, CH=CH, COO, CH=N, CH=N-N=CH, Alkylenoxyalkylen mit C₁-C₈-Alkylen, S, Si(CH₃)₂ oder 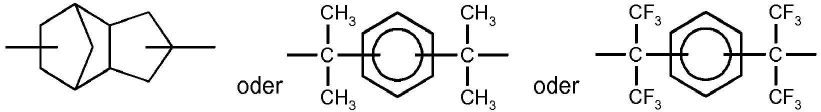 ist.

Beispiele sind 2,2-Bis(4-cyanato-phenyl)propan, 2,2-Bis(4-cyanato-phenyl)hexafluoropropan, Biphenylen-4,4'-dicyanat; 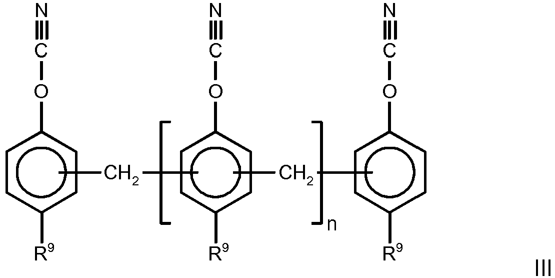 worin R⁹ Wasserstoff oder C₁-C₁₀-Alkyl ist und n eine ganze Zahl von 0 bis 20 bedeutet, sowie
di- oder mehrfunktionelle aliphatische Cyanate mit mindestens einem Fluoratom im aliphatischen Rest und vorzugsweise der Struktur IV:

N≡C-O-R¹⁰-O-C≡N IV

worin R¹⁰ ein zweibindiger organischer nichtaromatischer Kohlenwasserstoff mit mindestens einem Fluor-Atom und insbesondere mit 3 bis 12 Kohlenstoffatomen ist, dessen Wasserstoffatome vollständig oder teilweise durch weitere Fluor-Atome ersetzt sein können.

Vorteilhaft verwendet die Erfindung folgende Polysilazane:

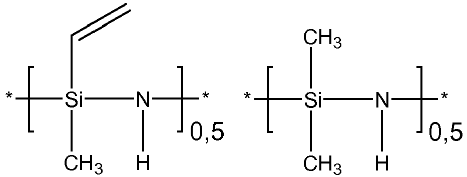

Silazan aus 50 Mol-% Dichlorvinylmethylsilan und 50 Mol-% Dichlordimethylsilan, im Rahmen der Offenbarung auch VML50 genannt.

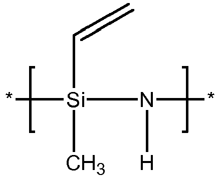

Vinyl-methyl-polysilazan, im Rahmen der Offenbarung auch VL100 genannt.

Die genannten Cyanate können als Monomere oder als Prepolymere, allein oder in Mischungen untereinander oder im Gemisch mit weiteren monofunktionellen oder polyfunktionelen Cyanaten eingesetzt werden.

Vorteilhaft verwendet die Erfindung folgende Cyanate:

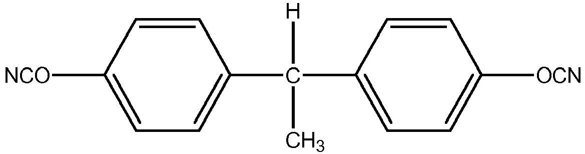

4,4'-Methylmethylen-diphenyldicyanat, im Rahmen der Offenbarung auch L10 genannt.

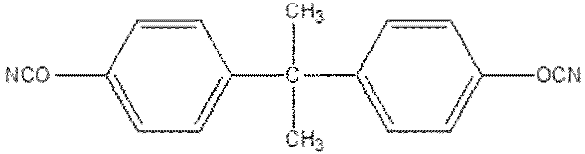

4,4'-Dimethylmethylen-diphenyldicyanat, im Rahmen der Offenbarung auch B10 genannt.

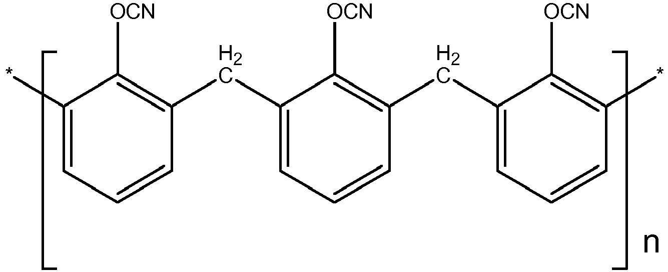

Oligo (3-methylen-1,5-phenylcyanat), im Rahmen der Offenbarung auch PT15 genannt. 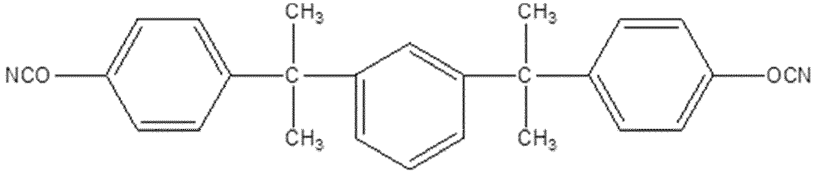 1,3-Bis(4-cyanatphenyl-1-(1-methylethyliden)benzol, im Rahmen der Offenbarung auch XU366 genannt.

Als Beispiele für gut geeignete Cyanate seien das Dicyanat von Bisphenol A (4,4'-Dimethylmethylen-diphenyldicyanat), 4,4'Ethylidendiphenyldicyanat oder Verbindungen mit der Formel III genannt, worin n 1, 2 oder 3 ist, R⁹ Wasserstoff ist und die Methylengruppe jeweils in ortho-Position zur Cyanatgruppe steht.

Das erfindungsgemäße Cyanatharz kann weiterhin mindestens einen Füllstoff enthalten. Dessen Material bzw. Zusammensetzung ist nicht kritisch. Diesbezüglich kann auf übliche Füllstoffe wie z.B. Mikrofiller verwiesen werden, wie sie als Verstärkungsmaterialien in Duromeren eingesetzt werden, also Füllstoffe mit einer Korngrößenverteilung, deren Schwerpunkt im µm-Bereich liegt. Aber auch Nanofiller mit kleineren Korngrößen (Korngrößenverteilung mit Schwerpunkt unterhalb des µm-Bereichs) sind möglich. Unabhängig davon, ob Mikrofiller und/oder Nanofiller eingesetzt werden, werden diese vorzugsweise ausgewählt unter anorganischen Füllstoffen, die gegebenenfalls organisch modifiziert und/oder beschichtet sein können. Sofern die Füllstoffe phosphororganische Bestandteile enthalten, verstärken sie die Brandsicherheit. Geeignete Materialien sind beispielsweise Siliciumdioxid, keramische Materialien, organisch modifizierte Silikone oder Siloxane oder Mischungen hiervon, insbesondere solche mit sehr hohen Oberflächen und/oder kleinen Korngrößen.

Der wenigstens eine Füllstoff kann allein oder in Mischung eingesetzt werden. Als sehr gut geeignet haben sich Mischungen verschiedener Füllstoffe aus unterschiedlichen Materialien erwiesen. Ihr Anteil im Harz kann vorzugsweise bis zu 20 Masse-% betragen.

Fakultativ können dem Ausgangsmaterial für die Harze weitere Zusätze beigegeben werden, oder solche Zusätze werden in das präpolymerisierte Harz nachträglich eingearbeitet. Beispiele für solche Additive sind oberflächenmodifizierende, z.B. die Oberflächenspannung senkende Mittel wie fluorkohlenstoff-modifizierte Polymere.

Das erfindungsgemäße Cyanatharz eignet sich für alle Arten von Formkörpern, insbesondere auch für die Herstellung von Prepregs und für Infusions- und für Pultrusionsverfahren. So kann mit dem Cyanatharz ein Substrat (insbesondere textiles Substrat) beschichtet oder, insbesondere, getränkt werden. Dies kann beispielsweise durch Verpressen in einer Düse geschehen, durch die das mit der Lösung benetzte Substrat gezogen wird. Alternativ oder zusätzlich wird das beschichtete Substrat unter Temperatur- bzw. Wärmeeinfluss, vorzugsweise bei ca. 80 bis 130°C, getrocknet, d.h. es wird das Harz prepolymerisiert. Die Dauer der Trocknung und damit der Prepolymerisationszustand liegen im Bereich von etwa 1 bis 10 Minuten, abhängig von der gewählten Temperatur (und konkreten Harzzusammensetzung), jedoch muss er vor Erreichen des sogenannten Gelpunktes liegen, sodass ein erneutes Aufschmelzen und somit eine Formgebung möglich ist. Zur Endverarbeitung (Verformung unter Temperatur und ggf. Druck) kann z. B. eine Temperatur von 160°C verwendet werden.

In allen Varianten der Erfindung kann das Cyanatharz vorteilhaft aus mindestens einem Cyanat in Mischung mit wenigstens einem Silazan oder wenigstens einer silazanhaltigen Verbindung hergestellt sein. Derartige Cyanatharze werden in DE 10 2009 013 410 A1 offenbart, auf deren diesbezügliche Offenbarung der Fachmann zurückgreifen kann.

Bevorzugt liegt die Viskosität des Cyanatharzes vor der Aushärtung bei 100 mPas oder weniger, und zwar sowohl mit als auch ohne als Härtungsmittel verwendetem Silazan.

Die Erfindung ist auch gerichtet auf ein Duromer, insbesondere ein ausgehärtetes Duromer, das durch Verpressen und/oder Erwärmen des oben beschriebenen Cyanatharzes erhalten wird.

Zusammenfassend lässt sich in Bezug auf die Erfindung Folgendes feststellen: Im Vergleich zu verschiedenen anderen Thermosets (gehärteten Duromeren) mit vergleichbarer Vernetzungsdichte und hoher Glastemperatur sind Cyanatharze im gehärteten Zustand von geringerer Sprödigkeit, jedoch bedürfen sie auch, wie alle anderen Harze, für die unterschiedlichsten Anwendungen Verbesserungen der Bruchzähigkeit, insbesondere für Anwendungen, die eine hohe Schadenstoleranz verlangen. In der Regel wird zwischen partikulären Toughenern (d.h. Zähmodifikatoren) und solchen, die bei der Härtung zur Phasenseparation führen, unterschieden. Zu letzteren gehören die klassischen Kautschuke (wie CTBN) aber auch thermoplastische Materialien. Die bisher eingesetzten Toughener führen zu signifikanten Erhöhungen der Viskosität und es sind vergleichsweise hohe Zusätze an Toughenern notwendig. Deshalb können solche Systeme für Infusionsanwendungen nicht zum Einsatz kommen. Die o.g. Toughener führen außerdem zu drastischen Absenkungen des E-Moduls, was bei der Bauteilauslegung berücksichtigt werden muss, um den Modulverlust wieder auszugleichen. Außerdem wird in der Regel eine Glastemperaturerniedrigung festgestellt.

Die vorliegende Erfindung berücksichtigt diese Eigenschaften herkömmlicher Toughener. Die Erfindung betrifft das Toughening mit Siloxanen, die sich insbesondere dadurch hervorheben, dass nur geringe Mengen erforderlich sind und dass die Viskositätserhöhung auch bei größeren Mengen an Zusätzen außerordentlich gering ist. Zudem wird keine bzw. nur eine äußerst geringe Reduzierung im E-Modul bzw. in der Glastemperatur festgestellt. Auch die Wasseraufnahme wird durch den Toughener weiter reduziert.

Die folgenden Figuren beschreiben bevorzugte Ausführungsformen der Erfindung, wobei
Figur 1 die Viskosität des erfindungsgemäßen Cyanatharzes in Abhängigkeit von der Temperatur bei seiner Erwärmung zeigt;
Figur 2 den Kompressionsmodul bzw. den kritischen Spannungsintensitätsfaktor Klc (auch K1c genannt) des erfindungsgemäßen Cyanatharzes in Modus 1 (d.h. bei Zugbeanspruchung) in Abhängigkeit vom prozentualen Gewichtsanteil des Siloxans als Modifikator zeigt;
Figur 3 den Elastizitätsmodul des erfindungsgemäßen Cyanatharzes in Abhängigkeit vom prozentualen Gewichtsanteil des Siloxans als Modifikator zeigt;
Figur 4 die Glasübergangstemperatur des erfindungsgemäßen Cyanatharzes in Abhängigkeit vom prozentualen Gewichtsanteil des Siloxans als Modifikator zeigt;
Figur 5 den Kompressionsmodul bzw. den kritischen Spannungsintensitätsfaktor Klc (auch K1c genannt) des erfindungsgemäßen, mit einer Silikonöl-Formulierung bzw. einem Wachs versetzten Cyanatharzes in Modus 1 (d.h. bei Zugbeanspruchung) in Abhängigkeit vom prozentualen Gewichtsanteil des Siloxans als Modifikator zeigt. Bei dem Silikonöl handelt es sich um ein Polydimethylsiloxan mit einem Molekulargewicht im Bereich von etwa 900 bis 1100. Bei dem Wachs ("WAX") handelt es sich um ein Polydialkylsiloxan-Caprolacton-Block-Copolymer mit dem Aufbau A-B-A ohne reaktive Endgruppen.

Die Erfindung wird nachstehend anhand von Beispielen näher erläutert. Die darin verwendete Bezeichnungen WAX/Wachs stehen für ein Polydialkylsiloxan-Caprolacton-Block-Copolymer mit dem Aufbau A-B-A ohne reaktive Endgruppen.

Tabelle 1 zeigt Versuchsergebnisse der Versuchsreihen MG226/1, H1 und MG226/2, H2 sowie MG225/2, H2, die jeweils mit einer Zusammensetzung des Cyanatharzes aus den Verbindungen L10 und VL100 unter Zusatz des oben beschriebenen Siloxans als Wachs mit einem prozentualen Gewichtsanteil WAX am Gesamtgewicht des Cyanatharzes von 5% durchgeführt wurden. L10 war dabei in einem prozentualen Massenverhältnis Ma% von 86 Teilen zu 14 Teilen VL100 vorhanden, was zusammen 95% des Gesamtgewichts des Cyanatharzes ausmachte. Als Vergleichsreihe dient eine Messung MG225/2, H2, die ebenfalls mit einem aus L10 und VL100 in einem Verhältnis von ebenfalls Ma% = 86/14 zusammengesetzten Cyanatharz ohne Zusatz von Wachs durchgeführt wurde. Für die Bestimmung des kritischen Spannungsintensitätsfaktors K1c (auch Klc genannt) sowie der Glasübergangstemperatur bzw. Glastemperatur Tg wurden gängige Messverfahren wie etwa die Bestimmung der Viskosität über die Messung der dielektrischen Konstante des Cyanatharzes in Abhängigkeit von der Temperatur genutzt. K1c charakterisiert die Bruchzähigkeit des Cyanatharzes. Die Versuchsreihen aus Tabelle 1 zeigen deutlich, dass der Zusatz von Wachs bei gleichbleibender Glastemperatur zu einer wesentlichen Erhöhung von K1c führt.

**Tabelle 1: L10 + VML50 bzw. VL100 im Äquivalenzverhältnis 8:2 - Materialkennwerte**

| | Ma% | WAX [%] | K1c [MN/m^{3/2}] | Tg [°C] |
|---|---|---|---|---|
| L10/VL100 MG226/1, H1 | 95(86/14) | 5 | 1,07 | 200 |
| L10/VL100 MG226/2, H2 | 95(86/14) | 5 | 1,13 | 200 |
| L10/VL100 MG225/2, H2 * | 86/14 | 0 | 0,67 | 200 |

| | | | | |
|---|---|---|---|---|
| * Referenzbeispiel | | | | |

Tabelle 2 zeigt Versuchsreihe MG208/2, H4 mit dem Cyanatharz in einer Zusammensetzung aus gleichen Anteilen PT15 und L10, die zusammen einen Anteil von 87% des Gesamtgewichts des Cyanatharzes ausmachen, und VML50 mit einem Gewichtsanteil von 13% ohne Zusatz von Wachs. Versuchsreihe MG215/2, H4 wurde mit Cyanatharz in einer Zusammensetzung aus gleichen Anteilen PT15 und L10, die zusammen einen Anteil von 87% an 95% des Gesamtgewichts des Cyanatharzes ausmachen, und VML50 mit einem Gewichtsanteil von 13% an 95% des Gesamtgewichts unter Zusatz von Wachs mit einem Gewichtsanteil von WAX = 5% am Gesamtgewicht des Cyanatharzes durchgeführt. Die Versuchsreihe MG270/2a, H4 wurde mit dem Cyanatharz in einer Zusammensetzung aus gleichen Anteilen PT15 und L10, die zusammen einen Gewichtsanteil am Gesamtgewicht des Cyanatharzes von 86% haben, und VML50 mit einem Gewichtsanteil von 14% am Gesamtgewicht des Cyanatharzes ohne Zusatz von Wachs durchgeführt. Die Versuchsreihe MG241, H4 wurde mit dem Cyanatharz in einer Zusammensetzung aus gleichen Anteilen PT15 und L10, die zusammen einen Gewichtsanteil an 95% des Gesamtgewichts des Cyanatharzes von 86% haben, und VML50 mit einem Gewichtsanteil von 14% an 95% des Gesamtgewichts des Cyanatharzes unter Zusatz von Wachs mit einem Gewichtsanteil von WAX = 5% am Gesamtgewicht des Cyanatharzes durchgeführt.

Auch hier zeigt sich, dass der Zusatz von Wachs zu einem erhöhten K1c bei in Abhängigkeit vom Zusatz von Wachs nur geringfügig veränderter Glastemperatur (d.h. im Wesentlichen gleicher Glastemperatur) führt und dass die Veränderung von K1c auch in Abhängigkeit der Polysilazan-Konzentration erfolgt.

**Tabelle 2: PT15/L10 + VML50 bzw. VL100 im Äquivalenzverhältnis 8:2 - Materialkennwerte**

| | Ma% | WAX [%] | K1c[MN/m^{3/2}] | Tg [°C] |
|---|---|---|---|---|
| PT15/L10(1:1)/VML50 MG208/2, H4 * | 87/13 | 0 | 0,48 | 213 |
| PT15/L10(1:1)/VML50 MG215/2, H4 | 87/13 | 5 | 0,89 | 216 |
| PT15/L10(1:1)/VL100 MG270/2a, H4 * | 86/14 | 0 | 0,56 | 224 |
| PT15/L10(1:1)/VL100 MG241, H4 | 86/14 | 5 | 0,89 | 216 |

| | | | | |
|---|---|---|---|---|
| * Referenzbeispiel | | | | |

Die voranstehenden Versuche wurden mit der Änderung wiederholt, dass die Silazankomponente weggelassen wurde. Die Ergebnisse waren vergleichbar.

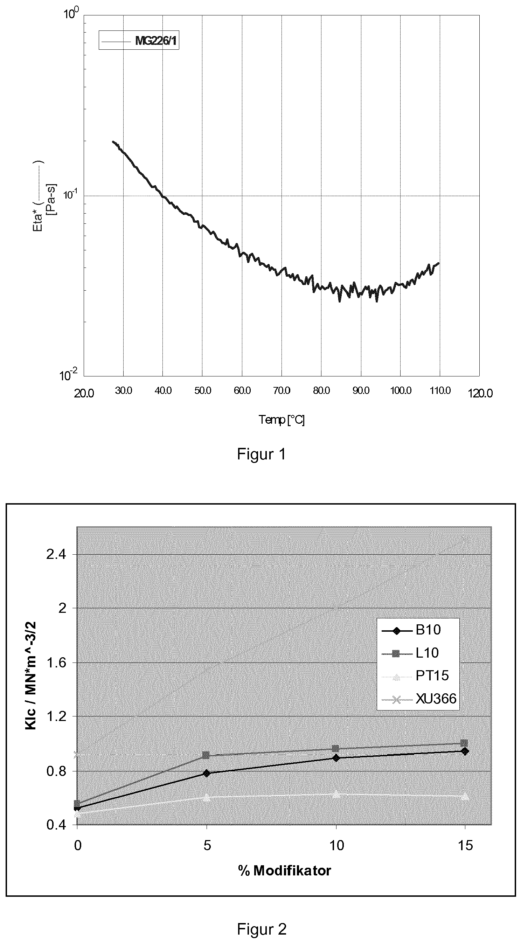

Figur 1 demonstriert für Versuchsreihe MG226/1, dass die Viskosität Eta* des Cyanatharzes ein (globales) Minimum von etwa 27 mPas bei etwa 90°C annimmt.

Figur 2 zeigt, für Messreihen mit dem Cyanatharz unter Verwendung von B10, L10 PT15 und XU366 als Cyanate, dass Klc bei steigendem Anteil bzw. Gewichtsanteil des Siloxans als Modifikator für alle Messreihen steigt.

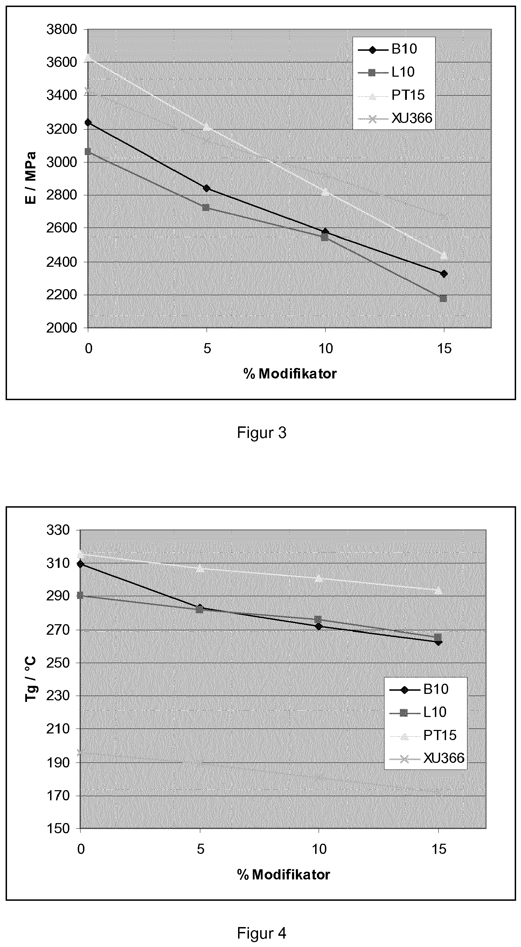

Figur 3 zeigt in stimmiger Weise für die Versuchsreihen aus Figur 2, dass der Elastizitätsmodul E des Cyanatharzes mit steigendem Anteil des Siloxans als Modifikator abnimmt.

Figur 4 zeigt, dass die Glastemperatur Tg des Cyanatharzes mit steigendem Anteil des Siloxans als Modifikator abnimmt.

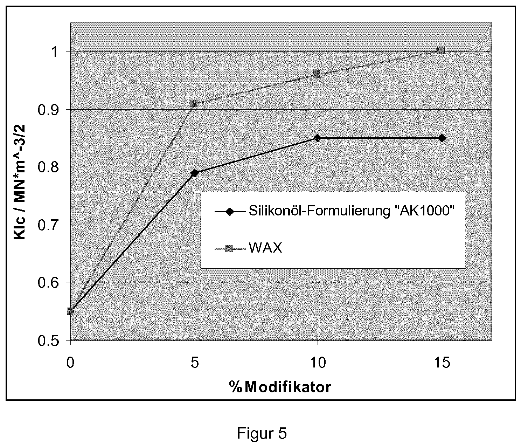

Figur 5 zeigt eine Versuchsreihe mit einer Silikonölformulierung AK1000 mit einer Viskosität 1000 mPas als Modifikator im Vergleich zu einer Versuchsreihe WAX mit Polydimethylsiloxan-Caprolacton-Copolymer als Modifikator. Es zeigt sich bei beiden Versuchsreihen ein Anstieg von Klc des Cyanatharzes mit steigendem Modifikatoranteil, wobei Klc in der Versuchsreihe WAX stärker ansteigt als bei der Verwendung der Silikonölformulierung.

## Patentansprüche

1. Cyanatharz, erhältlich durch Vermischen von mindestens
(i) wenigstens einem difunktionellen, oligofunktionellen und/oder polyfunktionellen Cyanat und/oder von wenigstens einem Prepolymer davon, gegebenenfalls in Kombination mit wenigstens einer weiteren copolymerisierbaren Komponente und
(ii) wenigstens einem Siloxan und/oder einer siloxanhaltigen Verbindung,
**dadurch gekennzeichnet, dass** das Harz ein lineares Polydialkylsiloxan-Caprolacton- oder -Caprolactam-Copolymer als siloxanhaltige Verbindung enthält.

2. Cyanatharz nach Anspruch 1, weiterhin enthaltend ein lineares Polydialkylsiloxan, das keine reaktiven Endgruppen enthält und in Form von homogen in feinverteilter Form vorhandenen Tropfen vorliegt.

3. Cyanatharz nach Anspruch 2, worin das Polydialkylsiloxan ein Polydimethylsiloxan ist.

4. Cyanatharz nach einem der Ansprüche 1 bis 3, worin das Polydialkylsiloxan-Caprolacton- oder Caprolactam-Copolymer ein Polydialkylsiloxan-Caprolacton-Copolymer ist.

5. Cyanatharz nach einem der Ansprüche 1 bis 4, worin das Polydialkylsiloxan-Caprolacton- oder Caprolactam-Copolymer ein Block-Copolymer der Formel ABA ist, worin B eine Polydialkylsiloxan-Einheit darstellt.

6. Cyanatharz nach einem der voranstehenden Ansprüche, worin das Polydialkylsiloxan-Caprolacton- oder Caprolactam-Copolymer ein Polydimethylsiloxan-Caprolacton- oder Caprolactam-Copolymer ist.

7. Cyanatharz nach einem der voranstehenden Ansprüche, worin das Polydialkylsiloxan-Caprolacton- oder Caprolactam-Copolymer in einem Anteil von 2 bis 10 Gew.-%, vorzugsweise in einem Anteil von 3,5 bis 6,5 Gew.-%, bezogen auf die Summe von Cyanat und Siloxan und/oder siloxanhaltiger Verbindung, vorhanden ist.

8. Cyanatharz nach einem der vorhergehenden Ansprüche, bei dem die wenigstens eine weitere copolymerisierbare Komponente ein monomeres, oligomeres oder polymeres Silazan ist oder enthält.

9. Cyanatharz nach einem der vorhergehenden Ansprüche, bei dem das Polydimethylsiloxan-Caprolacton-Copolymer ein Wachs ist.

10. Cyanatharz nach einem der vorhergehenden Ansprüche, wobei die Viskosität des Cyanatharzes vor der Aushärtung bei 100 mPas oder weniger liegt oder auf diesen Wert gebracht werden kann.

11. Cyanatharz nach einem der vorhergehenden Ansprüche, wobei der Anteil des Siloxans und/oder der siloxanhaltigen Verbindung bei 0,5 bis 50 Gew.-% bezogen auf das Gesamtgewicht des Cyanatharzes liegt.

12. Cyanatharz nach Anspruch 2, worin das lineare Polydialkylsiloxan Trialkylsilyl-Endgruppen aufweist.

13. Substrat, vorzugsweise textiles Substrat, das mit einem Cyanatharz nach einem der vorhergehenden Ansprüche getränkt oder beschichtet ist.

14. Duromer, insbesondere ausgehärtetes Duromer erhältlich durch Verpressen und/oder Erwärmen eines Cyanatharzes nach einem der Ansprüche 1 bis 12 oder eines getränkten oder beschichteten Substrats nach Anspruch 13.

15. Verwendung eines Cyanatharzes nach einem der vorhergehenden Ansprüche zur Herstellung von Prepregs oder in Infusions- oder Pultrusionsverfahren.

## Claims

1. A cyanate resin, obtainable by mixing at least
(i) one difunctional, oligofunctional and/or polyfunctional cyanate and/or of at least one prepolymer thereof, optionally in combination with at least one additional copolymerizable component and
(ii) at least one siloxane and/or a siloxane-containing component, wherein the resin contains a linear polydialkylsiloxane-caprolactone copolymer or polydialkylsiloxane-caprolactam copolymer as siloxane-containing component.

2. The cyanate resin according to claim 1, additionally containing a linear polydialkylsiloxane that contains no reactive end groups and is contained in the form of homogenously present and finely distributed drops.

3. The cyanate resin according to claim 1 or 2, wherein said polydialkylsiloxane is polydimethylsiloxane.

4. The cyanate resin according to any one of claims 1 to 3, wherein said polydialkylsiloxanecaprolactone copolymer or caprolactam copolymer is a polydialkylsiloxane-caprolactone-copolymer.

5. The cyanate resin according to any one of claims 1 to 4, wherein said polydialkylsiloxane-caprolactone copolymer or caprolactam copolymer is a block copolymer of the formula ABA, wherein B is a polydialkylsiloxane unit.

6. The cyanate resin according to any one of the preceding claims, wherein said polydialkylsiloxane-caprolactone copolymer or caprolactam copolymer is a polydimethylsiloxane-caprolactone copolymer or a caprolactam copolymer.

7. The cyanate resin according to any one of the preceding claims, wherein said polydialkylsiloxane-caprolactone copolymer or caprolactam copolymer is contained in a percent weight ratio of 2 to 10 percent by weight, preferably in a ratio of 3.5 to 6.5 percent by weight based on the total of cyanate and siloxane and/or siloxane-containing components.

8. The cyanate resin according to any one of the preceding claims, wherein the at least one additional copolymerizable component is or contains a monomeric, oligomeric or polymeric silazane.

9. The cyanate resin according to any one of the preceding claims, wherein said polydimethylsiloxane-caprolactone copolymer is a wax.

10. The cyanate resin according to any one of the preceding claims, wherein the viscosity of said cyanate resin prior to curing is 100 mPas or less, or can be brought to this value.

11. The cyanate resin according to any one of the preceding claims, wherein the proportion of siloxane and/or siloxane-containing compound is 0.5 to 50 percent by weight based on the total weight of said cyanate resin.

12. The cyanate resin according to claim 2, wherein the linear polydialkylsiloxane contains trialkylsilyl end groups.

13. A substrate, preferably a textile substrate, saturated or coated with a cyanate resin according to any one of the preceding claims.

14. A duromer, in particular a cured duromer obtainable by compressing and/or heating a cyanate resin according to any one of claims 1 to 12 or a saturated or coated substrate according to claim 13.

15. The use of a cyanate resin according to any one of the preceding claims for the production of prepregs or for applications employed for infusion or pultrusion.

## Revendications

1. Résine à base de cyanate, pouvant être obtenue par le mélange d'au moins
(i) au moins un cyanate difonctionnel, oligofonctionnel et/ou polyfonctionnel et/ou au moins un prépolymère de celui-ci, éventuellement en combinaison avec au moins un autre composant copolymérisable, et
(ii) au moins un siloxane et/ou un composant contenant du siloxane,
**caractérisée en ce que** la résine contient un copolymère polydialkylsiloxane-caprolactone ou -caprolactame linéaire en tant que composé contenant du siloxane.

2. Résine à base de cyanate selon la revendication 1, contenant en outre un polydialkylsiloxane linéaire, qui ne contient pas de groupes terminaux réactifs et qui se présente sous la forme de gouttes présentes de façon homogène sous forme finement divisée.

3. Résine à base de cyanate selon la revendication 2, dans laquelle le polydialkylsiloxane est un polydiméthylsiloxane.

4. Résine à base de cyanate selon l'une quelconque des revendications 1 à 3, dans laquelle le copolymère polydialkylsiloxane-caprolactone ou -caprolactame est un copolymère polydialkylsiloxane-caprolactone.

5. Résine à base de cyanate selon l'une quelconque des revendications 1 à 4, dans laquelle le copolymère polydialkylsiloxane-caprolactone ou -caprolactame est un copolymère bloc de la formule ABA, dans laquelle B représente une unité polydialkylsiloxane.

6. Résine à base de cyanate selon l'une quelconque des revendications précédentes, dans laquelle le copolymère polydialkylsiloxane-caprolactone ou -caprolactame est un copolymère polydiméthylsiloxane-caprolactone ou - caprolactame.

7. Résine à base de cyanate selon l'une quelconque des revendications précédentes, dans laquelle le copolymère polydialkylsiloxane-caprolactone ou -caprolactame est présent en une proportion de 2 à 10 % en poids, de préférence en une proportion de 3,5 à 6,5 % en poids, rapportés à la somme de cyanate et siloxane et/ou de composé contenant du siloxane.

8. Résine à base de cyanate selon l'une quelconque des revendications précédentes, dans laquelle ledit au moins un autre composant copolymérisable est ou contient un silazane monomère, oligomère ou polymère.

9. Résine à base de cyanate selon l'une quelconque des revendications précédentes, dans laquelle le copolymère polydiméthylsiloxane-caprolactone est une cire.

10. Résine à base de cyanate selon l'une quelconque des revendications précédentes, dans laquelle la viscosité de la résine à base de cyanate se situe à 100 mPas ou moins avant le durcissement ou peut être portée à cette valeur.

11. Résine à base de cyanate selon l'une quelconque des revendications précédentes, dans laquelle la proportion du siloxane et/ou du composé contenant du siloxane se situe de 0,5 à 50 % en poids rapportée au poids total de la résine à base de cyanate.

12. Résine à base de cyanate selon la revendication 2, dans laquelle le polydialkylsiloxane linéaire présente des groupes terminaux de trialkylsilyle.

13. Substrat, de préférence substrat textile, qui est imprégné ou revêtu avec une résine à base de cyanate selon l'une quelconque des revendications précédentes.

14. Duromère, en particulier duromère durci pouvant être obtenu par pressage et/ou chauffage d'une résine à base de cyanate selon l'une quelconque des revendications 1 à 12 ou d'un substrat imprégné ou revêtu selon la revendication 13.

15. Utilisation d'une résine à base de cyanate selon l'une quelconque des revendications précédentes pour la production d'un pré-imprégné ou dans des procédés d'infusion ou de pultrusion.
